# EUROPEAN PATENT APPLICATION

(11) **EP 4 640 588 A1**
(43) Date of publication of application: **29.10.2025**
(21) Application number: 24172501.9
(22) Date of filing: 25.04.2024
(51) Int. Cl.: B65G 1/00, B65G 15/12, B65G 43/00, G01N 21/00

(54) **AN INSPECTION SYSTEM FOR INSPECTING GOODS ENTERING OR LEAVING AN AUTOMATED STORAGE**

(71) Applicant: MOVU, 9160 Lokeren (BE)
(72) Inventor: Tacq, Andries, 8700 Tielt (BE)
(74) Representative: IP HILLS NV

(57) **Abstract**

An inspection system for inspecting goods in an automated storage is provided, which inspection system comprises a goods upholding means adapted to free at least part of the lower surface of a good from any contact, an inspection means to inspect the freed part of the lower surface of the good, and a moving means to move the inspection means and the freed part of the lower surface of the good relative one to the other

## Description

### Field of the Invention

The present invention generally relates to inspection system for inspecting goods in an automated storage and to methods to inspect goods in an automated storage.

### Background of the Invention

Nowadays goods of various sizes and wights are stored in large and warehouses, from which the goods are distributed as smaller packages to the customer or consumer. These warehouses become more and more automated, with limited human intervention for storing and taking out the goods in the racking system of the warehouse. Robots move in and out of the warehouse and pick loads and goods on various lanes and/or levels of the racking of the warehouse.

What is not always under control is the shape and condition of the goods, like boxes or pallets, being provided to or taken out of the racking system. It is however utmost important that goods to enter the racking system, fits into the transporting lanes and storage places of the warehouse. it is also important that during transportation, the goods should not damage the robots or the racking system. Therefore a well-functioning inspection system, inspecting the condition of the goods entering the warehouse, is a must for automated warehouses.

Similarly, during storage or transport, goods may get damaged. A well-functioning inspection system, inspecting the condition of the goods leaving the warehouse, is a must for automated warehouses as well.

It is also an advantage when the condition of entering and leaving of the goods can be compared in order to define whether damage to goods noticeable when leaving the warehouse, was caused by the transportation and storage in the warehouse.

### Summary of the Invention

The present invention provides an inspection system which inspects the goods possibly also at the sides of the goods being less visible or less accessible for inspection.

According to the first aspect an inspection system for inspecting goods in an automated storage is provided, the inspection system comprises a goods upholding means adapted to free at least part of the lower surface of a good from any contact, an inspection means to inspect the freed part of the lower surface of the good, and a moving means to move the inspection means and the freed part of the lower surface of the good relative one to the other.

According to some embodiments of the inspection system, the goods upholding means may be coupled to a goods transporting system to transport goods to, from or in a racking frame, said goods transporting system being part of the moving means and comprising at least a first and a second supporting section where at least part of the lower surface of the good is supported, between which a third section is present where at least part of the lower surface of the good is freed from any contact, said inspection means being positioned along the goods transporting system, the inspection system is adapted to inspect the lower side of the goods at the third section.

The inspection system may be a part of an automated storage, such as a 2D or a 3D automated storage. Preferably the automated storage is an automated pallet storage, for storage of totes or for storage of similar products. The inspection system may be part of an inbound station. The inbound system is adapted for receiving pallets loaded with goods. The inspection system may be part of an outbound station. The outbound system is adapted for receiving stored pallets from the automated storage, which pallets are loaded with goods. The inspection system may be part of a picking station. The picking system is adapted for receiving stored pallets from the automated storage, which pallets are loaded with goods and to receive pallets from the picking station or operator loaded with other or the same goods. The inspection system may as well be positioned and be part of along the conveying routes in the automated storage.

According to some embodiments of the inspection system, the goods transporting system may be a conveyor system. The conveyor system may be a conveyor belt system (or transport belt system), a roller conveyor system or a ball conveyor system. The conveyor system may be gravity conveyor system such as gravity roller conveyor system or gravity ball conveyor system. The conveyor system may be a chain conveyor system. The conveyor system may comprise a rail support optionally provided with rollers or balls for conveying the goods. The conveyor system may comprise a pair of mutually parallel conveyor belts, transport belts, ball conveyors or roller conveyors, each of the two elements contacting the good at one edge of the lower side of the goods, such the good spans the sideways distance between the two elements. The moving means, in particularly the goods transporting system is adapted to move the goods such that during movement, each part of the complete lower surface of the goods has been freed from any contact at least once while allowing the inspection means to inspect this freed part. As such the whole lower surface can be inspected consecutively, part by part.

According to some embodiments of the inspection system, the goods transportation system may comprise a first and second mutually consecutive good transporting means between which said third section is provided as an open space.

This third section may be a slit or gap between the two consecutive good transporting means. The good, passing over this slit or gap is freed from any contact and may be inspected by the inspection means when passing this slit or gap.

According to some embodiments of the inspection system, the first and second mutually consecutive good transporting means may be two consecutive conveyors. These conveyors may be identical, similar, or mutually different.

Each of these two conveyors may be a conveyor belt (or transport belt), a roller conveyor or a ball conveyors. The conveyors may be gravity conveyors such as gravity roller conveyors or gravity ball conveyors. The conveyor system may be a chain conveyor system. Each of these two conveyors may comprise a pair of mutually parallel conveyor belts, transport belts, ball conveyors or roller conveyors, each of the two elements contacting the good at one edge of the lower side of the goods, such the good spans the sideways distance between the two elements.

By enabling the inspection of the side, which is contacting the goods transporting system, preferably the lower side of pallet carrying goods, the pallet's lower side is inspected. This allows to detect pallets which are damaged or are not or no longer in line with the requirements for the received goods, such as pallet carried goods. As such pallets or goods which are out of dimension, damaged or likely to become broken during handing (due to small defect which may lead to permanent damage over time or by handling of the good in the racking frame) may be detected and possibly removed from the storage prior to causing interruption of the activity of the automated storage and its racking frame into which the received goods are to be stored. The inspection means may comprise at least a line camera, inspecting the freed part of the lower surface of the good through said slid or gap. Alternatively or additionally, the inspection means may comprise one or more lasers and/or one or more cameras and/or one or more true depth camera. The inspection means may be positioned to inspect the lower side of the goods upwards. Hence the inspection means may be positioned under the good transporting means and may be adapted to inspect, e.g. make images or scan, upwards towards the passing lower sides of the goods.

According to other embodiments, the first and second mutually consecutive good transporting means are two rollers from a gravity or roller conveyor, between a gap is present. This third section may be the gap between the two rollers. The inspection means may comprise at least a line camera, inspecting the freed part of the lower surface of the good through said slid or gap.

According to some embodiments, the inspection system may comprise a separation means to separate non-allowable from allowable goods based upon the comparison of the images or image data deviated from the images with target images or target image data for the side of the goods contacting the goods transporting system.

Such separation means may comprise the provision of a second path, e.g. by means of conveyors, and a switch to enable the non-allowable goods to follow a track different from the track to be followed by the allowable goods.

Thus according to some embodiments, the inspection system may comprise an extraction means to extract the non-allowable goods from the goods carrying system.

According to some embodiments of the inspection system, the goods upholding means may comprise a goods lifting system adapted to free at least part of the lower surface of a good from any contact, said inspection system comprising a moveable device being adapted to pass under the at least part of the lower surface of a good freed from any contact.

Such moveable device may be an AMR, an AGV or a shuttle adapted to carry said goods in, to or from the racking of the automated storage. To this extent, such moveable device may have a carrying platform to carry said good. The inspection system may comprise an inspection means inspecting the lower side of the goods being lifted by the goods lifting system while passing under this lifted good, e.g. immediately before receiving the lifted goods on its carrying platform while the moveable device positions itself under the lifted good, or immediately after the good is lifted from the carrying platform, when the moveable device moves away from the lifted good.

According to some embodiments of the inspection system, the inspection means may comprise at least a first camera. According to some embodiments of the inspection system, the at least first camera may be a line camera.

Optionally, more than one camera may be used. The images, either the consecutive images of one camera, e.g. a line camera, or the images, consecutively or simultaneously taken by more than one camera, may be combined in order to make a more information generating image set. Possibly two or more cameras may be used, each camera making images in non-identical directions. As an example, two, three, four, five or even more cameras may be used. The first of the at least two cameras may be oriented such it takes images in a first direction from one lateral side of the goods upholding means towards, being possibly upwards or diagonally upwards to the at least partly freed lower surface of a good. The second of the at least two cameras may be oriented such it takes images in a second direction from the other lateral side of the goods upholding means towards, being possibly upwards or diagonally upwards to the at least partly freed lower surface of a good.

Possibly one or more mirrors may be used, each or together to extend and/or bend the image field or fields of the one or more cameras.

Possibly the inspection means may comprise switches, like physical switches or sensors, initiating and/or ending the image capturing activity of the one or more cameras.

Alternatively or additionally, the inspection means may comprise one or more lasers and/or a true depth camera and combine this information obtained from such elements in order to make a more information generating image set.

According to some embodiments of the inspection system, the inspection system may comprise an image processing means to analyse images take by said at least first camera.

This image processing means may obtain image data information from the one or more images taken or generated. The image processing means may not only determine the dimensions of the goods, but also the state of the lower side of the goods, like the lower side of the pallet, and may even identify the anomalies detected. Such anomalies may be missing parts of the pallet, broken parts of the pallet, deformed parts of the pallet, parts of the pallet being oriented at an incorrect angle, unclean or polluted pallets, as well as goods being misaligned on the pallet, leaking, extending beyond the boundary profile allowable in a racking frame of an automated storage, and alike.

This image processing means may be a part of the inspection system itself. Alternatively, the image processing means may be a part of a control unit of an inbound station, an outbound system, or more in general an automated storage management unit. Therefore, according to some embodiments, the inspection system may comprise communication means to communicate the images or image data deviated from the images to a control unit.

According to some embodiments, the control unit and/or the image processing means may be a part of an automated storage management unit, a control unit of an inbound station or an outbound station, which automated storage management unit, control unit of an inbound station or an outbound station may be installed remote from the inspection system. The image processing means and/or control unit may obtain the images from the inspection means of the inspection system via any presently known communication means, like wired means or by wireless communication using e.g. Wi-Fi or Bluetooth communication.

According to some embodiments, the inspection system, the automated storage management unit, or the control unit of an inbound station or an outbound station, may comprise a data storage means to store images of, or image data deviated from the images taken by the at least one camera.

According to some embodiments, the inspection system may comprise a comparison means to compare images or image data deviated from the images with target images or target image data for the side of the goods contacting the goods carrying system.

This comparison means may compare images or data from the images with target images or target data. By comparing these images or data, information is obtained to what extent the subject of the image complies with required criteria, the latter defining goods being allowed in the automated storage or alike. As such information like an indication or signal whether the inspected object can be allowed or not to the further steps in its handling (e.g. to allow and load the object in the automated storage, or to allow the retrieved object from the automates warehouse to be processed further) can be generated.

This comparison means may be a part of the inspection system itself. Alternatively, the comparison means may be a part of a control unit of an inbound station, an outbound system, or more in general an automated storage management unit. In case the comparison means is part of a control unit of an inbound station, an outbound system, or more in general an automated storage management unit, this information can be transferred back to the inspection system or to any other part of the automated storage. The inspection system may obtain the information from the comparison means via any presently known communication means, like wired means or by wireless communication using e.g. Wi-Fi or Bluetooth communication.

When goods are stored in an automated storage and later taken back out, by comparing the images or image data taken from the goods upon taking in the goods, e.g. when an inspection system is part of an inbound station or positioned downstream the inbound station or stations, with images taken from the same side of the goods upon taking the goods out of the automates storage, e.g. when an inspection system is part of an outbound station or positioned upstream the outbound station or stations, information on the damage caused by the handling of this goods in the automated storage can be obtained.

The inspection system may further comprise inspection means to inspect the other sides of the goods being inspected by the inspection means, such inspection means may be light sensors, light curtains, or additional cameras, optionally being line cameras, or other sensors, like line scanners, distance sensors, tactile sensors and alike. As such a complete 3D image of the whole goods may be obtained. Also these images or data may be used to determine to what extent the goods are allowable in the racking frame of an automated storage. This because not only the lower side may be damaged or may show defects, but also the other sides of the goods may be damaged or may be too large and extend the dimensions of allowable or allowed goods. The 3D images may be used to compare goods as they were when being taken in, with goods taken from the automates storage.

Optionally, inspection system may further comprise a barcode or RFID reader and alike, to identify the goods.

According to a second aspect of the present invention, an inbound station is provided, which inbound station comprises at least one inspection system according to the first aspect of the invention. The inbound station is adapted to pass or bring goods towards an automated storage, e.g. to the racking frame of an automated storage.

According to a third aspect of the present invention, an outbound station adapted to is provided, which inbound station comprises at least one inspection system according to the first aspect of the invention. The outbound station is adapted to pass or bring out goods from an automated storage, e.g. to the racking frame of an automated storage.

According to a fourth aspect of the present invention an automated storage is provided, this automated storage comprises at least one inspection system according to the first, second or third aspect of the invention.

According to some embodiments, the automated storage may comprise at least one inbound station, said inbound station comprises said at least one inspection system.

This inbound station may be an inbound station according to the second aspect of the invention. This at least one inbound station is adapted to receive goods to be stored in a racking frame of an automated storage. The inbound station comprises goods carrying means to carry stored goods towards the racking frame. The goods carrying means of this inbound station may form a goods transportation path together with the goods carrying means of the inspection system.

According to some embodiments, the automated storage may comprise at least one outbound station, said outbound station comprises said at least one inspection system.

This outbound station may be an outbound station according to the third aspect of the invention. This at least one outbound station is adapted to bring out goods stored in said racking frame of said automated storage. The outbound station may comprise a further goods carrying system to carry stored goods from the racking frame. The goods carrying means of this outbound station may form a good transportation path together with the goods carrying means of the inspection system.

According to some embodiments, the automates storage may comprise at least a first and a second inspection system, said automated storage comprises at least one inbound station, said inbound station comprises said first inspection system, said automated storage comprises at least one outbound station, said outbound station comprises said second inspection system.

According to a fifth aspect an inspection system according to any one of the first, second or third aspects is used to inspect goods being moved within an automated storage.

The inspection system may be part of an inbound or an outbound station, or may be positioned upstream one or more outbound stations, or downstream one or more inbound stations.

According to a sixth aspect a line camera is used to inspect the lower side of goods being moved relative over the line camera.

It is clear that features of one aspect of the invention may be combined with one or more features of another aspect of the invention.

### Brief Description of the Drawings

Fig. 1 illustrates schematically an inspection system for inspecting goods in an automated storage.
Fig. 2 illustrates schematically an inspection system inspecting goods in an automated storage.
Fig. 3 illustrates schematically another inspection system inspecting goods in an automated storage.

In the different figures, the same refence signs refer to the same or a similar feature.

### Detailed Description of Embodiment(s)

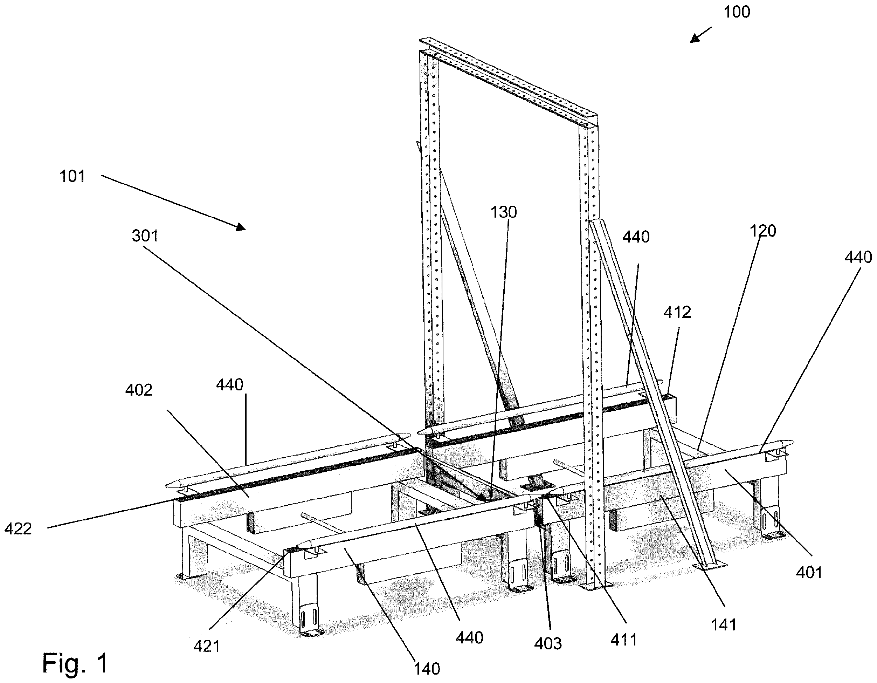

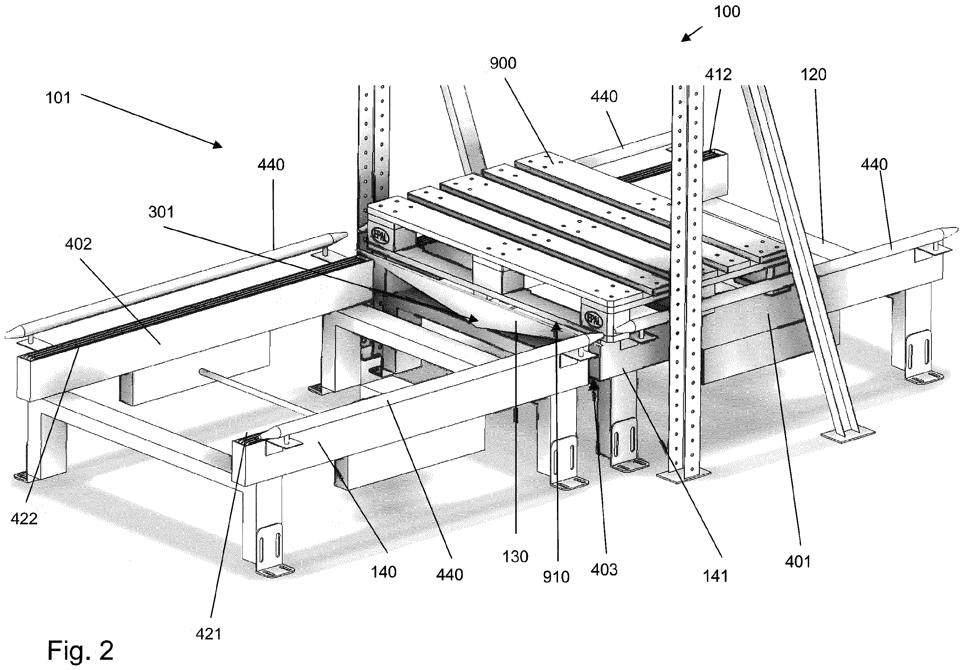

An inspection system 100 for inspecting goods 900 in an automated storage is shown in figure 1 and figure 2. The inspection system 100 comprises a goods upholding means 120 adapted to free at least part of the lower surface 910 of a good from any contact. In this particular embodiment, the good 900 is a pallet, which can be empty (as shown in figure 2) or which may be loaded with payload.

The system 100 comprises an inspection means 130 which is to inspect the freed part of the lower surface 910 of the good 900, and a moving means 140 to move the inspection means and the freed part of the lower surface of the good relative one to the other. In this particular embodiment shown in figures 1 and 2, the moving means 140 is adapted to move the good 900 over the inspection means 130.

The moving means 140 comprises a goods transporting system 141 to transport goods to, from or in a racking frame, which transporting system comprises at least a first and a second supporting section 401 and 402 where at least part of the lower surface of the good is supported. Between the first and second supporting section 401 and 402, a third section 403 is present where the lower surface of the good is freed from any contact.

The goods transporting system in fact is a conveyor system, comprising two conveyors 410 and 420. The first supporting section 401 comprises these first conveyors 410, and the second supporting section 402 comprises these second conveyors 420.

Each of these two conveyors comprises a pair of mutually parallel conveyor belts 411 and 412, respectively 421 and 422. Each of the two elements or belts of a pair of belts contacts the good at one edge of the lower side of the goods, such the good spans the sideways distance between the pair of mutually parallel conveyor belts. Aside each of the two elements or belts of a pair of belts a movement limitation rail 440 is provided, preventing the good to shift towards a side of the pair of mutually parallel conveyor belts. As such the goods may also position to some extent during the transportation to the third zone.

Between the two conveyors 410 and 420, a third section 403 is provided as an open space 430, being a slit or gap between the two conveyors 410 and 420.

The inspection means 130 along the goods transporting system and is adapted to inspect the lower side of the goods at the third section upwards. The inspection means comprises at least a first line camera 301, imaging consecutive line images when a pallet passes the third section 403, driven by at least one of the two conveyors 410 and 420. By compiling the line images, a complete image of the lower side of the pallet can be provided. This is usually provided by an image processing means to analyse images take by this first camera. This image processing means may obtain image data information from the one or more images taken or generated. The image processing means may not only determine the dimensions of the goods, but also the state of the lower side of the goods, like the lower side of the pallet, and may even identify the anomalies detected. Such anomalies may be missing parts of the pallet, broken parts of the pallet, deformed parts of the pallet, parts of the pallet being oriented at an incorrect angle, unclean or polluted pallets, as well as goods being misaligned on the pallet, leaking, extending beyond the boundary profile allowable in a racking frame of an automated storage, and alike. Optionally, the inspection system, the automated storage management unit, or the control unit of an inbound station or an outbound station, may comprise a data storage means to store images of, or image data deviated from the images taken by the at least one camera.

This inspection system may be a part of an automated storage, such as a 2D or a 3D automated storage, e.g. an automated pallet storage. The inspection system may be part of an inbound station or an outbound station. The inspection system may as well be positioned and be part of along the conveying routes in the automated storage.

The inspection system 100 may be part of an inbound station 101. Goods, in this case pallet, are received in the inspection system via the pair of mutually parallel conveyor belts 411 and 412, and moved over the third zone 403, hence over the view scope of the line camera 301 and brought to the pair of mutually parallel conveyor belts 421 and 422. As such an image of the lower side of the pallet is provided. This image can be used in the management of the automated warehouse system of which the inbound station 101 is part of.

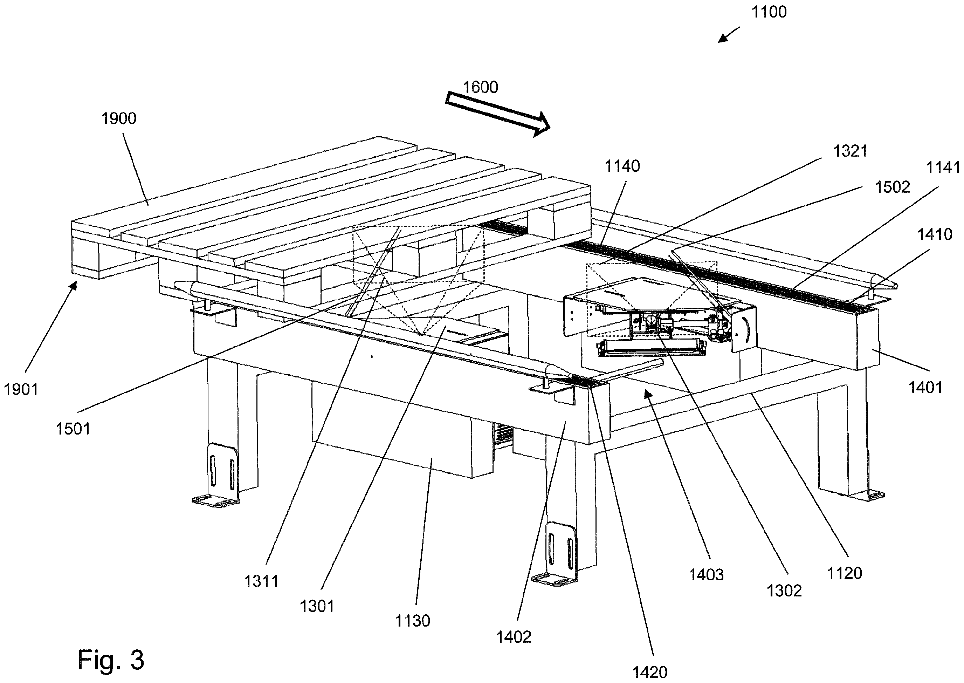

An inspection system 1100 for inspecting goods 1900 in an automated storage is shown in figure 3. The inspection system 1100 comprises a goods upholding means 1120 adapted to free at least part of the lower surface 1910 of a good from any contact. In this particular embodiment, the good 1900 is a pallet, which can be empty (as shown in figure 3) or which may be loaded with payload.

The system 1100 comprises an inspection means 1130 which is to inspect the freed part of the lower surface 1910 of the good 1900, and a moving means 1140 to move the inspection means and the freed part of the lower surface of the good relative one to the other. In this particular embodiment shown in figure 3, the moving means 1140 is adapted to move the good 1900 over the inspection means 1130.

The moving means 1140 comprises a goods transporting system 1141 to transport goods to, from or in a racking frame, which transporting system comprises at least a first and a second supporting section 1401 and 1402 where at least part of the lower surface of the good is supported. Between the first and second supporting section 1401 and 1402, a third section 1403 is present where the lower surface of the good is freed from any contact.

The goods transporting system compromises two parallel conveyors 1410 and 1420. The first conveyor 1410 supports one lateral side of the good 1900 the other conveyor 1410 supports the other lateral side of the good 1900.

Between the two conveyors 1410 and 1420, a third section 1403 is provided as an open space.

The inspection means 1130 positioned along the goods transporting system is adapted to inspect the lower side of the goods at the third section 1403 diagonally upwards. The inspection means comprises two cameras 1301 and 1302, each imaging consecutive images when a pallet passes the third section 1403, driven by at least one of the two conveyors 1410 and 1420. The image fields 1311 and 1321 of the respective cameras 1301 and 1302 (indicated with dotted lines in figure 3) are oriented inward and diagonally upwards. Possibly the image fields can be extended or bended by the use of one or more mirrors. As such images from both sides are taken from at least the centre portion of the freed part of the lower surface of the good. In order to avoid imaging action of the cameras 1301 and 1302 when no pallet is in the inspection zone, i.e. the third section 1403, two laser detectors 1501 and 1502 are provided, one at each traverse side of the third section 1403. A good 1900, passing e.g. in the direction 1600 as shown in figure 3, will modify the laser reflection of the first laser detector 1501, trigger detector 1501 to send a signal and switch on camera 1301, while the second camera 1302 is not yet activated. Once the second laser detector 1502 is reached by the good 1900, this laser detector 1502 may detect the good 1900 and hence activate the second camera, who immediately has a vision on the freed part of the lower surface of the good. The first camera 1301 may remain activated, until the first laser detector 1501 fails to detect good 1900. At this moment, the first laser detector 1501 will switch of the first camera 1301. Depending on the dimension of the good 1900 and the distance between the two laser detectors, similarly, the second camera 1302 may remain activated, until the second laser detector 1502 fails to detect good 1900. At this moment, the second laser detector 1502 will switch of the first camera 1302. It is understood that, when the moving direction is reversed, the synchronisation of the switching on and off is to work in a similar way as well.

By compiling the line images, a complete image of the freed part of the lower side of the pallet, angled from both lateral sides, can be provided. This is usually provided by an image processing means to analyse images take by this first camera. This image processing means may obtain image data information from the one or more images taken or generated. The image processing means may not only determine the dimensions of the goods, but also the state of the lower side of the goods, like the lower side of the pallet, and may even identify the anomalies detected. Such anomalies may be missing parts of the pallet, broken parts of the pallet, deformed parts of the pallet, parts of the pallet being oriented at an incorrect angle, unclean or polluted pallets, as well as goods being misaligned on the pallet, leaking, extending beyond the boundary profile allowable in a racking frame of an automated storage, and alike. Optionally, the inspection system, the automated storage management unit, or the control unit of an inbound station or an outbound station, may comprise a data storage means to store images of, or image data deviated from the images taken by the at least one camera.

This inspection system may be a part of an automated storage, such as a 2D or a 3D automated storage, e.g. an automated pallet storage. The inspection system may be part of an inbound station or an outbound station. The inspection system may as well be positioned and be part of along the conveying routes in the automated storage.

The inspection system 1100 may be part of an inbound station in a similar way as the inspection system 100 of figures 1 and 2.

The goods may be provided to the inspection system 1100 by means of conveyor belts of roller lanes or alike, as is well understood by the skilled person.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An inspection system (100) for inspecting goods (900) in an automated storage, the inspection system comprises a goods upholding means (120) adapted to free at least part of the lower surface (910) of a good from any contact, an inspection means (130) to inspect the freed part of the lower surface of the good, and a moving means (140) to move the inspection means and the freed part of the lower surface of the good relative one to the other.

2. An inspection system according to claim 1, wherein said goods upholding means is coupled to a goods transporting system (141) to transport goods to, from or in a racking frame, said goods transporting system being part of the moving means (140) and comprising at least a first and a second supporting section (401, 402) where at least part of the lower surface of the good is supported, between which a third section (403) is present where at least part of the lower surface of the good is freed from any contact, said inspection means (130) being positioned along the goods transporting system, the inspection system is adapted to inspect the lower side of the goods at the third section.

3. An inspection system according to claim 2, wherein said goods transporting system (400) is a conveyor system.

4. An inspection system according to any one of the claims 2 to 3, wherein the goods transportation system comprises a first and second mutually consecutive good transporting means (410, 420) between which said third section (403) is provided as an open space.

5. An inspection system according to claim 4, wherein the first and second mutually consecutive good transporting means (410, 420) are two consecutive conveyors.

6. An inspection system according to claim 1, wherein said goods upholding means comprises a goods lifting system adapted to free at least part of the lower surface of a good from any contact, said inspection system comprising a moveable device being adapted to pass under the at least part of the lower surface of a good freed from any contact.

7. An inspection system according to any one of the preceding claims, wherein the inspection means (130) comprises at least a first camera (301).

8. An inspection system according to claim 7, wherein said at least first camera (301) is a line camera.

9. An inspection system according to any one of the claims 7 to 8, wherein the inspection system comprises an image processing means to analyse images take by said at least first camera.

10. An inspection system according to any one of the claims 7 to 9, wherein the inspection system comprises communication means to communicate the images or image data deviated from the images to a control unit.

11. An inspection system according to any one of the claims 7 to 10, wherein the inspection system comprises a comparison means to compare images or image data deviated from the images with target images or target image data for the side of the goods contacting the goods carrying system.

12. An automated storage comprising at least one inspection system (100) according to any one of the preceding claims.

13. An automated storage according to claim 12, wherein said automated storage comprises at least one inbound station (101), said inbound station comprises said at least one inspection system.

14. An automated storage according to claim 12, wherein said automated storage comprises at least one outbound station, said outbound station comprises said at least one inspection system.

15. An automated storage according to any of the claims 12 to 14, said automates storage comprising at least a first and a second inspection system, said automated storage comprises at least one inbound station, said inbound station comprises said first inspection system, said automated storage comprises at least one outbound station, said outbound station comprises said second inspection system.

16. The use of an inspection system (100) according to any one of the claims 1 to 11, to inspect goods being moved within an automated storage.
